# EUROPÄISCHE PATENTANMELDUNG

(11) **EP 1 970 154 A1**
(43) Veröffentlichungstag der Anmeldung: **17.09.2008**
(21) Anmeldenummer: 07012517.4
(22) Anmeldetag: 26.06.2007
(51) Int. Cl.: B23K 7/10, B23K 9/32, B23K 26/16

(54) **Verfahren zum thermischen Trennen und Fügen**

(30) Priorität: 13.03.2007 DE 102007012084
(71) Anmelder: Linde Aktiengesellschaft, 80807 München (DE)
(72) Erfinder: Plebuch, Franz-Clemens, 86854 Amberg (DE); Steusloff, Ronald, 23992 Neukloster (DE)

(57) **Zusammenfassung**

Um ein Verfahren zum thermischen Trennen, ein Verfahren zum thermischen Fügen sowie eine Vorrichtung (200 bzw. 200') zum thermischen Trennen bzw. zum thermischen Fügen mindestens eines Gegenstands (70), aufweisend
- mindestens ein zum thermischen Abtragen von Material des Gegenstands (70) ausgebildetes thermisches Trennwerkzeug (10)
- mindestens ein zum thermischen Fügen von Material des Gegenstands (70) ausgebildetes Fügewerkzeug (20), insbesondere Schweiß- oder Lötwerkzeug,
so weiterzubilden, dass beim thermischen Trennen oder beim thermischen Fügen ausgetribenes bzw.weg spritzendes Material (72) nicht an Oberflächen und unerwünschten Stellen anhaftet, wird mindestens eine Kühleinrichtung (100) mit mindestens einer Zuführeinrichtung (30, 32, 34) zum Zuführen mindestens eines zum Kühlen des ausgetragenen oder spritzenden Materials (72) ausgebildeten tiefkalten Mediums vorgeschlagen.

## Beschreibung

### Technisches Gebiet

Die vorliegende Erfindung betrifft ein Verfahren zum thermischen Trennen mindestens eines Gegenstands, wobei Material des Gegenstands geschmolzen oder verdampft wird und das geschmolzene oder verdampfte Material zumindest teilweise aus der Bearbeitungsstelle ausgetragen wird.

Die vorliegende Erfindung betrifft des Weiteren ein Verfahren zum thermischen Fügen mindestens eines Gegenstands, wobei Material des Gegenstands zum Herstellen mindestens einer stoffschlüssigen Verbindung geschmolzen wird und das geschmolzene Material teilweise vom der Bearbeitungsstelle weg spritzt.

Die vorliegende Erfindung betrifft des Weiteren eine Vorrichtung zum thermischen Trennen bzw. zum thermischen Fügen gemäß dem Oberbegriff des Anpruchs 11.

### Stand der Technik

Beim thermischen Trennen werden Werkstücke geschnitten, indem der zu schneidenden Stelle Energie zugeführt wird, wodurch Material am Bearbeitungsort entfernt wird und dieses Material schließlich mit Hilfe eines Gasstrahls, dem sogenannten Schneidstrahl, ausgetrieben wird. Von Vorteil ist hierbei, dass das Werkzeug, nämlich der Schneidstrahl, nicht stumpf werden kann und dass auf das zu schneidende Werkstück kaum Kraft ausgeübt wird. Für die Energiezufuhr gibt es verschiedene Möglichkeiten, so dass mehrere thermische Trennverfahren existieren.

Beim autogenen Brennschneiden wird der Werkstoff mit einer Brenngas-Sauerstoff-Flamme auf Zündtemperatur erhitzt und im Schneidsauerstoffstrom verbrannt. Durch die Verbrennung des Werkstoffs im Schneidsauerstoff wird dem Schneidprozess zusätzlich zur Flamme Energie zugeführt. Mit der kinetischen Energie des Sauerstoffstrahls werden die durch die Verbrennung entstehende Schlacke und flüssiges Material ausgetrieben.

Das Plasmaschneiden ist ein Schmelzprozess, bei dem ein metallischer Werkstoff durch einen Plasmastrahl geschmolzen und aus der Schnittfuge geblasen wird. Beim Plasmaschneiden wird die erforderliche Energie zum Aufschmelzen des Materials in der Schnittfuge über einen eingeschnürten Lichtbogen zugeführt, der von einem Plasmagas umgeben ist. Als Plasmagas werden meist Argon, Stickstoff, Sauerstoff oder Wasserstoff sowie Mischungen daraus eingesetzt. Auch mit Druckluft als Plasmagas wird gearbeitet. Das Material wird beim Plasmaschneiden aus der Schnittfuge ausgeblasen.

Beim Laserschneiden wird ein Laserstrahl als Schneidwerkzeug benutzt. Dazu wird der Laserstrahl auf die gewünschte Stelle gelenkt, wofür in der Regel mit einer Linse im Schneidkopf der Laserstrahl auf die Oberfläche des zu schneidenden Werkstücks oder in das Innere des Werkstücks fokussiert wird, wobei die hohe Energiedichte den zu schneidenden Werkstoff schnell erwärmt. Das flüssige Material wird beim Laserstrahlschneiden mit dem Schneidgas aus der Schnittfuge ausgetrieben. Enthält das Schneidgas Sauerstoff, der mit dem Werkstoff reagiert, spricht man von Laserbrennschneiden und es entsteht neben flüssigem Material auch Schlacke. Neben dem Brenschneiden gibt es noch Laserstrahlschmelzschneiden und Lasersublimierschneiden. Als Schneidgase kommen neben Sauerstoff meist Stickstoff, Argon, Helium und auch andere Gase und Gasgemische zum Einsatz.

Eine Abgrezung der thermischen Schneidverfahren Laserstrahlschneiden, Plasmaschneiden und autogenes Brennschneiden nach technischen sowie wirtschaftlichen Gesichtspunkten wird beispielsweise in dem Sonderdruck E 29/95 von H. Mair und F.C. Plebuch, Firma Linde AG, Bestell-Nr. 8189/2, Stand Dezember 1999, gegeben.

Beim thermischen Fügen wird eine stoffschlüssige Verbindung mittels Schweißen, mittels Löten, insbesondere mittels Hartlöten, oder mittels Mischformen aus Schweißen und/oder aus Löten erzeugt. Als Fügeverfahren eignen sich insbesondere Plasmafügen, Laserfügen sowie Lichtbogenfügen.

Beim Plasmafügen dient als Wärmequelle ein Strahl aus hocherhitztem, elektrisch leitendem Gas, ein sogenannter Plasmastrahl. Beim Plasmafügen kann sowohl mit gepulstem als auch mit kontinuierlichem Plasmalichtbogen gearbeitet werden.

Ebenso wie das Plasmafügen wird auch das Laserfügen oder Laserstrahlfügen insbesondere zum Schweißen oder zum Löten von Blechen eingesetzt. Laserfügen zeichnet sich durch eine sehr geringen Bauteilverzug aus.

Ferner ist das Lichtbogenfügen eine häufig eingesetzte Fügetechnik, mit der Bauteile mittels Lichtbogen geschweißt oder gelötet werden. Beim Lichtbogenfügen brennt ein Lichtbogen zwischen einer abschmelzenden oder einer nicht abschmelzenden Elektrode und dem zu bearbeitenden Werkstück. Ein Schweißen geht mit einem Aufschmelzen des Grundwerkstoffs an der Bearbeitungsstelle im Lichtbogen einher, während bein Hartlöten nur der Zusatzwerkstoff aufschmilzt.

Notwendig bei thermischen Schneidprozessen ist jedoch, dass Material vom zu schneidenden Bereich ausgetragen werden muss, um eine Trennung zu erreichen. Das ausgetriebene Material trifft auf Stellen auf und lagert sich dort an, an welchen es unerwünscht ist. Beim Ausblasen lagert sich das Material vornehmlich gegenüber der Bearbeitungsstelle an. Beim thermischen Fügen wiederum spritzt Material vom zu fügenden Bereich weg und die Spritzer lagern sich unerwünschterweise an benachbarten Oberflächen des Gegenstands an.

Auf diese Weise entstehen auf dem Gegenstand und/oder an dessen Umgebung unerwünschte Materialanhaftungen, die sich nur schwer entfernen lassen. Die störenden Materialanhaftungen beeinträchtigen das Erscheinungsbild, führen bei nachfolgenden Fertgiungsprozessen zu Schweirigkeiten und auch die Funktionsfähigkeit des Gegenstands kann beeinträchtigt sein.

### Darstellung der vorliegenden Erfindung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfindung die Aufgabe zugrunde, Verfahren der eingangs genannten Art sowie eine Vorrichtung der eingangs genannten Art so weiterzubilden, dass sich beim thermischen Trennen ausgetriebens Material und beim thermischen Fügen spritzendes Material nicht unerwünscht an dem Gegenstand oder an unerwünschten Stellen in der Umgebung der Bearbeitungsstelle anhaftet.

Diese Aufgabe wird durch ein Verfahren mit den im Anspruch 1 angegebenen Merkmalen, durch ein Verfahren mit den im Anspruch 2 angegebenen Merkmalen sowie durch eine Vorrichtung mit den im Anspruch 11 angegebenen Merkmalen gelöst. Vorteilhafte Ausgestaltungen und zweckmäßige Weiterbildungen der vorliegenden Erfindung sind in den jeweiligen Unteransprüchen gekennzeichnet.

Grundsätzlich kann der zu trennende bzw. zu fügende Gegenstand sowohl ein metallischer Werkstoff als auch ein nichtmetallischer Werkstoff sein. Der Gegenstand kann also im Wesentlichen aus mindestens einem Metall und/oder aus mindestens einem Kunststoff und/oder aus Glas gebildet sein.

Die vorliegende Erfindung basiert auf der Vermeidung von Materialanhaftungen des sich vom zu trennenden bzw. zu fügenden Bereich ausgetragenen bzw. spritzenden Materials an unerwünschten Stellen. Das ausgetriebene bzw. spritzende Material lagert sich nicht an dem Bearbeitunsgegenstand oder an Gegenständen in der Umgebung der Berbeitungsstelle an, sondern wird durch das Zuführen des tiefkalten Mediums gekühlt und erstarrt dabei. Unerwünschte Materialanhaftungen werden dadurch vermieden. Insbesondere fallen damit auch unerwünschten Materialanhaftungen in dem gesamten Schneid- bzw. Fügebereich weg. Unter dem Schneid- und Fügebereich wird dabei der ganze Bereich verstanden, auf welchen der Schneid- oder Fügeprozess Einfluss nimmt, während unter der Bearbeitungsstelle die Stelle verstanden wird, an der geschnitten oder gefügt wird. Beim Schneiden wird die Bearbeitungsstelle auch als Schnittfuge bezeichnet.

Durch die Kühlung wird das beim thermischen Trennen oder beim thermischen Fügen austretende Material vorteilhafterweise soweit unterkühlt, dass es, in der Regel nach Art eines Granulats, wieder erstarrt; somit wird ein durch den sogenannten Adhäsionseffekt bedingtes Anhaften des Materials zuverlässig vermieden. Das ausgetreibene oder spritzende Material erstarrt also durch Zuführen des tiefkalten Mediums erfindungsgemäß als Granulat in benachbarten Bereichen bzw. in der Umgebung der Bearbeitungsstelle.

Handelt es sich beim thermischen Trennen um ein Brennschneiden wird Schlacke gebildet. Während des Trennprozesses wird flüssiges Material und Schlacke aus der Schnittfuge ausgetrieben. Um Materialanhaftungen und insbesondere Schlackeanhaftungen im Schneidbereich zu vermeiden, wird das ausgetriebene Material, also Werkstoffmaterial und Schlacke, gemäß der vorliegenden Erfindung gekühlt und erstarrt dabei. Die vorliegende Erfindung zielt nicht in erster Linie darauf ab, die sogenannte Bartbildung, also das Anhaften von wiedererstarrtem Material direkt am zu trennenden Bereich, etwa direkt an der Schnittfuge, zu verhindern. Vielmehr wird mittels der vorliegenden Erfindung ein Anbacken von ausgetriebenem Material an umgebenden Oberflächen, beispielsweise an einer gegenüber dem zu trennenden Bereich liegenden Profilseite, verhindert.

Mittels der vorliegenden Erfindung kann weiterhin ein Anbacken von Schweißspritzem oder Lötspritzem an unerwünschten Stellen verhindert werden. Im gesamten Fügebereich werden somit vor unerwünschten Materialanhaftungen verhindert. Ein Nachbearbeiten zum Entfernen der Materialanhaftungen ist damit in nahezu allen Fällen überflüssig.

Vorteilhafterweise erfolgt das thermische Trennen (sogenanntes thermisches Schneiden oder thermal cutting) mittels der Methode des Plasmaschneidens, des Laserschneidens oder des autogenen Brennschneidens.

Das thermische Fügen erfolgt vorteilhafterweise mittels der Methode des Schweißens, insbesondere des Lichtbogenschweißen, des Laserschweißens oder des Plasmaschweißens. Ferner kann das thermische Fügen mittels der Methode des Hartlötens erfolgen, insbesondere mittels Lichtbogenhartlötens, Laserstrahlhartlöten oder Plasmalöten.

Zweckmäßigerweise weist das Medium im tiefkalten Zustand eine geringere Temperatur als etwa minus zehn Grad Celsius, vorzugsweise als etwa minus dreißig Grad Celsius, insbesondere als etwa minus fünfzig Grad Celsius, auf. Die vorliegende Erfindung funktioniert prinzipiell allen Aggregatzuständen (gasförmig, flüssig, fest) und auch mit Mischungen aus verschiedenen Aggregatzuständen. Auch ist es nicht notwendig, dass sich das Medium in einem thermodynmaischen Gleichgewichtszustand befindet.

Das tiefkalte Medium liegt also im Bearbeitungsbereich in im Wesentlichen gasförmiger und/oder im Wesentlichen flüssiger und/oder im Wesentlichen fester Form, insbesondere als Gas, als Tröpfchen, als Schnee, als Pellet, als Trockeneis oder als ein Gemisch aus Gas und/oder aus Tröpfchen und/oder aus Schnee und/oder aus Pellets und/oder aus Trockeneis, vor.

In besonders bevorzugter Weise ist es möglich, ein in einem Druckbehälter aufbewahrtes Medium unter Druck zu mindestens einer Verteilereinrichtung zu leiten; mittels einer derartigen Verteilereinrichtung kann das gasförmige oder flüssige Medium Zuführeinrichtungen, insbesondere Düsen, zum Beispiel Expansionskühldüsen, Partikeldüsen oder Schlitzdüsen, zugeführt werden, wobei das Medium bei der Entspannung weiter abkühlt. Bei dem Druckbehälter, in welchem das Medium aufbewhrt wird, handelt es sich vorzugsweise um eine Steigrohrflasche.

Gemäß einer vorteilhaften Weiterbildung der vorliegenden Erfindung kann neben dem ausgetriebenen bzw. spritzendem Material auch der beim thermischen Trennen oder beim thermischen Fügen bearbeitete Gegenstand selbst zumindest bereichsweise durch das Zuführen des tiefkalten Mediums gekühlt werden.

Die vorliegende Erfindung betrifft des Weiteren eine Kühleinrichtung zum Kühlen von sich beim thermischen Trennen oder beim thermischen Fügen ausgetriebenen oder spritzendem Material, aufweisend mindestens eine Zuführeinrichtung zum Zuführen des tiefkalten Mediums gemäß der vorstehend dargelegten Art.

Die Kühleinrichtung kann als Kühlung, insbesondere als Kohlendioxidkühlung (CO₂-Kühlung), beispielsweise
- bei thermischen Schneidprozessen zur Verhinderung des Anhaftens von geschmolzenem Material und/oder von Schlacke oder
- bei Schweißprozessen zur Verhinderung des Anhaftens von Schweißspritzern, eingesetzt werden.
   Gemäß einer vorteilhaften Weiterbildung der vorliegenden Erfindung ist der Prozess des Zuführens des tiefkalten Mediums automatisierbar.
   Die vorliegende Erfindung bietet den Vorteil, dass der Gegenstand sofort und unmittelbar, insbesondere ohne Nachreinigung, weiterverarbeitbar ist. Ferner kann das wiedererstarrte Material leicht entfernt bzw. entsorgt werden. Das abgekühlte und erstarrte Material liegt lose auf der Oberfläche auf und kann widerstandslos weggewischt oder weggeblasen werden oder fällt beim Wenden des Gegenstands aufgrund der Schwerkraft von der Oberfläche ab.
   Die vorliegende Erfindung betrifft schließlich die Verwendung von Verfahren gemäß der vorstehend dargelegten Art und/oder mindestens einer Kühleinrichtung gemäß der vorstehend dargelegten Art und/oder mindestens einer Vorrichtung gemäß der vorstehend dargelegten Art zum Trennen bzw. zum Fügen des Gegenstands bei engem Raum. Die Erfindung zeigt besondere Vorteile bei thermischen Trennen von Rohren und von teilweise offenen Rohren. Aber auch bei nicht-rohrförmigen Profilen, die geschlossen oder teilweise offen sein können, zeigen sich die Vorteile der Erfindung. Hier wird das tiefkalte Medium vorteilhafterweise in das Profil, insbesonder in das rohrförmige Profil, eingebracht. Beim Fügen wird das Anbacken von Spritzern unterbunden, so dass hier vorteilhafterweise das tiefkalte Medium in den Bearbeitungsbereich eingebracht wird.

### Kurze Beschreibung der Zeichnungen

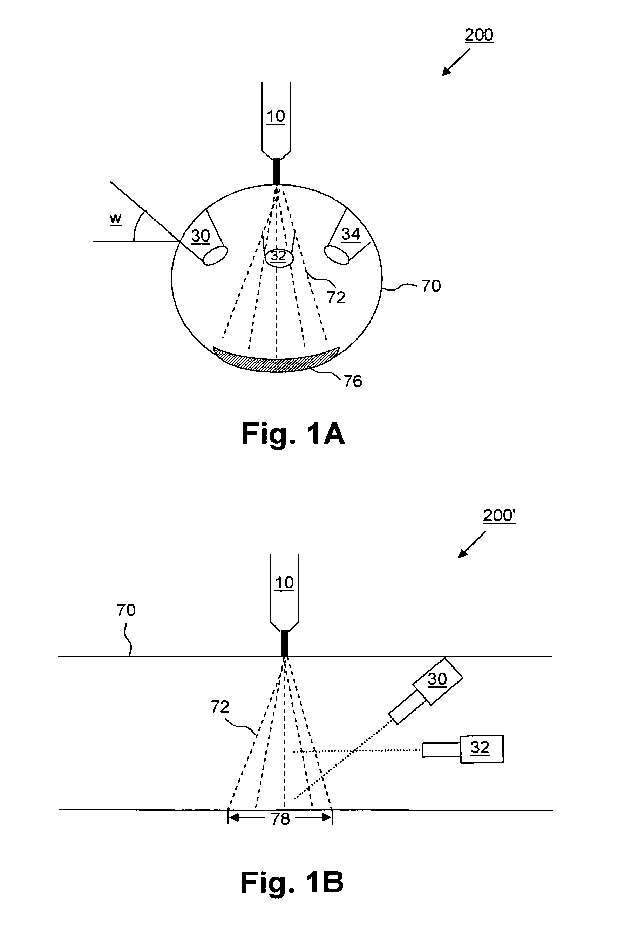

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die den Ansprüchen 1 und 2 sowie dem Anspruch 7 jeweils nachgeordneten Ansprüche verwiesen, andererseits werden weitere Ausgestaltungen, Merkmale und Vorteile der vorliegenden Erfindung nachstehend unter Anderem anhand der durch Fig. 1A bis Fig. 3 veranschaulichten Ausführungsbeispiele näher erläutert.

Es zeigt:
- Fig. 1A: in schematischer Darstellung eine Detailansicht eines Ausführungsbeispiels für eine Vorrichtung zum thermischen Trennen gemäß der vorliegenden Erfindung, die nach dem Verfahren gemäß der vorliegenden Erfindung arbeitet;
- Fig. 1 B: in schematischer Darstellung eine Detailansicht eines Ausführungsbeispiels für eine Vorrichtung zum thermischen Trennen gemäß der vorliegenden Erfindung, die nach dem Verfahren gemäß der vorliegenden Erfindung arbeitet;
- Fig. 2: in schematischer Darstellung eine erste Übersichtsdarstellung der Vorrichtung aus Fig. 1A; und
- Fig. 3: in schematischer Darstellung eine zweite Übersichtsdarstellung der Vorrichtung aus Fig. 1A.

Gleiche oder ähnliche Ausgestaltungen, Elemente oder Merkmale sind in Fig. 1A bis Fig. 3 mit identischen Bezugszeichen versehen.

### Bester Weg zur Ausführung der vorliegenden Erfindung

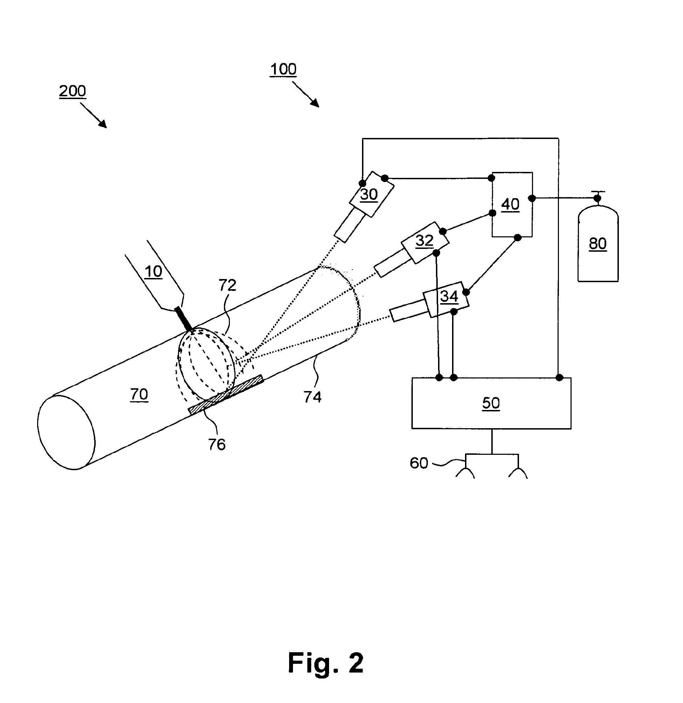

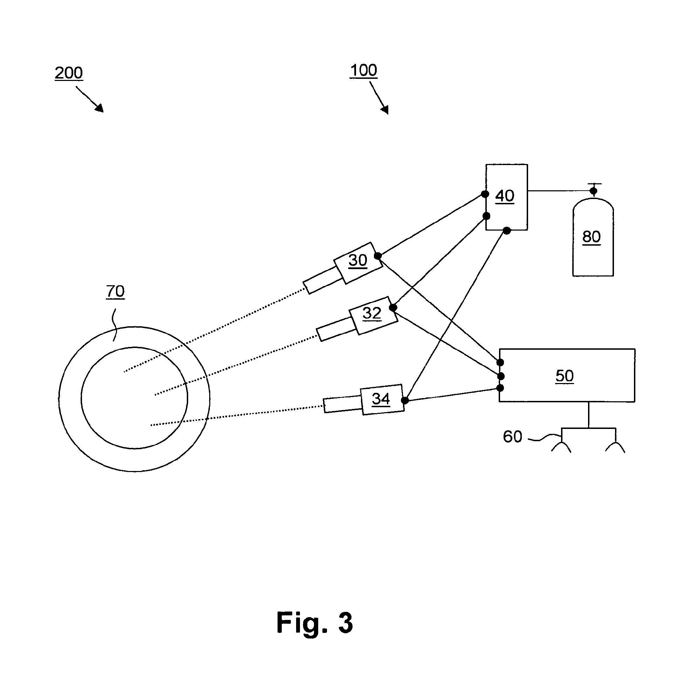

Zur Vermeidung überflüssiger Wiederholungen beziehen sich die nachfolgenden Erläuterungen hinsichtlich der Ausgestaltungen, Merkmale und Vorteile der vorliegenden Erfindung (soweit nicht anderweitig angegeben) auf die in Fig. 1A, Fig. 1B, Fig. 2 und in Fig. 3 dargestellte, zum thermischen Trennen vorgesehene Vorrichtung 200.

Die anhand Fig. 1A veranschaulichte Vorrichtung 200 zum thermischen Trennen weist ein thermisches Trennwerkzeug 10, insbesondere einen Plasmabrenner, einen Laserstahl oder einen Autogenbrenner, auf. Mittels dieses Trennwerkzeugs 10 wird ein Gegenstand 70, nämlich ein metallisches Rohr, geschnitten. Dazu wird Material 72 aus der Schnittdfuge ausgetrieben.

Fig. 1A zeigt den Querschnitt und Fig. 1B den Längsschnitt des Rohrs 70.

Zum Kühlen von sich beim thermischen Trennen ausgetriebenen Material 72 weisen die Vorrichtungen 200, 200' jeweils eine Kühleinrichtung 100 (vgl. Fig. 2, Fig. 3) auf.

Die Kühleinrichtung 100 führt mittels Zuführdüsen 30, 32, 34 ein tiefkaltes Medium zu. Als tiefkaltes Medium wird vorteilhafterweise wird tiefkaltes Kohlendioxid zugeführt.

Durch Zuführen des tiefkalten Kohlendioxids wird das ausgetriebene Material 72 gekühlt und dabei verfestigt.

Das abgekühlte Material 76, insbesondere die granulierte Schlacke, liegt dann lose auf der Oberfläche des Rohrs 70 auf. In Fig. 3 ist eine Aufsicht auf die granulierte lose Schlacke 76 dargestellt; die Kühleinrichtung 100 zeigt Fig. 3 dagegen als Seitenansicht.

Um einen optimalen Kühlungseffekt zu erzielen, wird der Neigungswinkel w der Kohlendioxiddüsen 30, 32, 34 in Abhängigkeit von der Enge des Durchmessers des Rohrs 70 gewählt.

Zum Aufbewahren des Mediums (im Falle des anhand Fig. 1A bis Fig. 3 veranschaulichten Ausführungsbeispiels also des Kohlendioxids) weist die Kühleinrichtung 100 einen üblichen Druckbehälter 80 auf, die Kohlendioxid mit einem Druck von etwa 45 bar bis etwa 70 bar enthält; die Gasflasche 80 weist Normaltemperatur auf. Unter diesen Umständen ist das Kohlendioxid flüssig. Über ein Steigrohr wird aus dem Druckbehälter 80, die aufgrund des Steigrohrs Steigrohrflasche genannt wird, flüssiges Kohlendioxid entnommen.

Das flüssige Kohlendioxid wird mittels einer Verteilereinrichtung 40 zu den Kohlendioxiddüsen 30, 32, 34 geleitet, das heißt auf die Kohlendioxiddüsen 30, 32, 34 verteilt, an denen das flüssige Kohlendioxid entspannt wird. Durch diese Entspannung wird aus dem Medium das tiefkalte Medium, denn das Kohlendioxid kühlt sich bei der Entspannung ab. Somit ist das Kohlendioxid in keinem Gleichgewichtszustand; es liegt dann als sogenannter Kohlendioxid-Schnee vor.

Als derartige, zum Entspannen des Mediums geeignete Zuführeinrichtungen 30, 32, 34 können an sich bekannte Düsen zum Einsatz kommen, so etwa
- Schlitzdüsen mit Expansionsschlitz (vgl. Druckschrift DE 41 41 020 A1),
- Expansionskühldüsen (vgl. Druckschrift DE 199 47 823 A1) und/oder
- CO₂-Partikel-Düsen (vgl. Druckschrift DE 199 50 016 A1).

Prinzipiell kann das Kohlendioxid aber nicht nur in einer Druckflasche 80 verflüssigt aufbewahrt werden, sondern im Rahmen der vorliegenden Erfindung auch durch Kühlung verflüssigt und isoliert gespeichert werden, so dass das Kohlendioxid in abgefülltem und isoliertem Zustand aufbewahrt wird. In diesem Falle wird dann auch flüssiges Kohlendioxid entnommen, das in den Zuführeinrichtungen 30, 32, 34 entspannt wird.

Alternativ zur Verwendung von Kohlendioxid als Medium kann grundsätzlich auch jedes andere Gas oder jede andere Flüssigkeit jeder andere Schnee als Medium in tiefkaltem Zustand zum Einsatz gelangen, beispielsweise Argon oder Stickstoff, die meist flüssig in Tanks vorliegt. Im Falle von Argon oder Stickstoff als Medium ist ein Entspannen desselben möglich, jedoch nicht obligatorisch erforderlich; dies bedeutet, dass im Falle von Stickstoff Expansionsdüsen 30, 32, 34 nicht unbedingt anzuordnen sind, denn flüssiger Stickstoff ist von vorneherein so kalt, dass er unmittelbar als tiefkaltes Medium auf den Bearbeitungsort eingebracht werden kann. Jede beliebige Flüssigkeit und jedes beliebiges Medium kann im Rahmen der Erfidnung verwendet werden, solange das Medium nur tiefkalt vorliegt oder in einen teifkalten Zustand gebracht werden kann. Insbesondere geeignet sind deshalb alle Formen von Eis oder Schnee.

Ferner weist die Kühleinrichtung 100 eine Steuereinrichtung 50 zur insbesondere automatischen Steuerung der Zuführung des Mediums, insbesondere des Kohlendioxids, auf.

Mittels der vorstehend beschriebenen Kühlung durch das tiefkalte Medium, insbesondere mittels der Kohlendioxidkühlung (CO₂-Kühlung), wird ein Anhaften oder Anbacken des ausgetragenen Materials am Rohr 70 zuverlässig verhindert, denn das abgekühlte Material 76 klebt nicht an der gegenüberliegenden Rohrwand an. Somit kann das dann in granulierter Form vorliegende abgekühlte Material einfach vom Rohr 70 abgeschüttelt werden.

### Bezugszeichenliste

- 10: thermisches Trennwerkzeug, insbesondere Plasmabrenner, Laserstrahl oder Autogenbrenner
- 30: erste Zuführeinrichtung zum Zuführen mindestens eines tiefkalten Mediums, insbesondere erste Kohlendioxiddüse (CO₂-Düse)
- 32: zweite Zuführeinrichtung zum Zuführen mindestens eines tiefkalten Mediums, insbesondere zweite Kohlendioxiddüse (CO₂-Düse)
- 34: dritte Zuführeinrichtung zum Zuführen mindestens eines tiefkalten Mediums, insbesondere dritte Kohlendioxiddüse (CO₂-Düse)
- 40: Verteilereinrichtung zum Verteilen mindestens eines Mediums auf die Zuführeinrichtungen 30, 32, 34, insbesondere Kohlendioxidverteiler (CO₂-Verteiler)
- 50: Steuereinrichtung zum, insbesondere automatischen, Steuern des Zuführens mindestens eines tiefkalten Mediums
- 60: Energieversorgung der Steuereinrichtung 50
- 70: Gegenstand, insbesondere Werkstück, beispielsweise ein Profil, insbesondere ein metallisches Rohr
- 72: ausgetragenes oder ausgetriebenes oder ausgeblasenes Material
- 74: abzutrennendes Rohrsegment oder Teil des Gegenstands 70
- 76: abgekühltes, erstarrtes Material, insbesondere granuliertes Material
- 78: mit erstarrtem Material, insbesondere mit granuliertem losen Material beaufschlagte Fläche des Gegenstands 70
- 80: Druckbehälter, insbesondere Steigrohrflasche
- w: in Abhängigkeit von der Enge des Raums, insbesondere vom Durchmesser des Rohrs 70, gewählter Neigungswinkel der Zuführeinrichtungen 30, 32, 34
- 100: Kühleinrichtung
- 200: Vorrichtung zum thermischen Trennen (= erstes Ausführungsbeispiel; vgl. Fig. 1A, Fig. 2, Fig. 3)
- 200': Vorrichtung zum thermischen Fügen (= zweites Ausführungsbeispiel; vgl. Fig. 1 B)

## Patentansprüche

1. Verfahren zum thermischen Trennen mindestens eines Gegenstands (70), wobei Material des Gegenstands (70) geschmolzen oder verdampft wird und das geschmolzene oder verdampfte Material zumindest teilweise (72) aus der Bearbeitungsstelle ausgetragen wird,
**dadurch gekennzeichnet,**
**dass** das sich ausgetragene Material (72) durch Zuführen mindestens eines tiefkalten Mediums gekühlt wird.

2. Verfahren zum thermischen Fügen mindestens eines Gegenstands (70), wobei Material des Gegenstands (70) zum Herstellen mindestens einer stoffschlüssigen Verbindung geschmolzen wird und das geschmolzene Material teilweise (72) vom der Bearbeitungsstelle weg spritzt,
**dadurch gekennzeichnet,**
**dass** das spritzende Material (72) durch Zuführen mindestens eines tiefkalten Mediums gekühlt wird.

3. Verfahren gemäß Anspruch 1 oder 2, **dadurch gekennzeichnet, dass** das ausgetragene oder spritzende Material (72) vor dem Auftreffen auf Oberflächen erstarrt ist.

4. Verfahren gemäß mindestens einem der Ansprüche 1 bis 3, **dadurch gekennzeichnet, dass** als tiefkaltes Medium im Wesentlichen Kohlendioxid oder Stickstoff zugeführt wird.

5. Verfahren gemäß mindestens einem der Ansprüche 1 bis 4, **dadurch gekennzeichnet, dass** das tiefkalte Medium durch Entspannen von mindestens einem Medium, insbesondere von flüssigem Kohlendioxid, bereitgestellt wird.

6. Verfahren gemäß mindestens einem der Ansprüche 1 bis 5, **dadurch gekennzeichnet, dass** das Medium aus einem Druckbehälter (80), insbesondere aus einer Steigrohrflasche, entnommen wird.

7. Kühleinrichtung (100) zum Kühlen von beim thermischen Trennen oder beim thermischen Fügen ausgetragene oder spritzende Material (72), aufweisend mindestens eine Zuführeinrichtung (30, 32, 34) zum Zuführen mindestens eines zum Kühlen des ausgetriebenen oder spritzenden Materials (72) ausgebildeten tiefkalten Mediums.

8. Kühleinrichtung gemäß Anspruch 7, **dadurch gekennzeichnet, dass** das tiefkalte Medium im Wesentlichen Kohlendioxid oder Stickstoff aufweist.

9. Kühleinrichtung gemäß Anspruch 7 oder 8, **dadurch gekennzeichnet, dass** das tiefkalte Medium durch Entspannen in einer Düse bereitstellbar ist.

10. Kühleinrichtung gemäß mindestens einem der Ansprüche 7 bis 9, **gekennzeichnet durch** mindestens einen Druckbehälter (80) zum Aufbewahren des Mediums.

11. Vorrichtung (200 bzw. 200') zum thermischen Trennen bzw. zum thermischen Fügen mindestens eines Gegenstands (70), aufweisend
- mindestens ein zum thermischen Abtragen von Material des Gegenstands (70) ausgebildetes Trennwerkzeug (10), insbesondere Schneidwerkzeug, bzw.
- mindestens ein zum thermischen Fügen von Material des Gegenstands (70) ausgebildetes Fügewerkzeug (20), insbesondere Schweiß- oder Lötwerkzeug,
**gekennzeichnet durch**
mindestens eine Kühleinrichtung (100) gemäß mindestens einem der Ansprüche 7 bis 10.

12. Verwendung eines Verfahrens gemäß mindestens einem der Ansprüche 1 bis 6 und/oder mindestens einer Kühleinrichtung (100) gemäß mindestens einem der Ansprüche 7 bis 10 und/oder mindestens einer Vorrichtung (200 bzw. 200') gemäß Anspruch 11 zum Trennen bzw. zum Fügen des Gegenstands (70) bei engem Raum, insbesondere zum Trennen mindestens eines geschlossenen oder teilweise offenen Profils, insbesondere eines rohrförmigen Profils.
